# EUROPEAN PATENT APPLICATION

(11) **EP 1 306 823 A2**
(43) Date of publication of application: **02.05.2003**
(21) Application number: 02257280.4
(22) Date of filing: 21.10.2002
(51) Int. Cl.: G08C 17/02

(54) **Apparatus and method for reading of utility meters**

(30) Priority: 23.10.2001 US 599
(71) Applicant: Agilent Technologies, Inc., Palo Alto, CA 94306 (US)
(72) Inventor: Middleton, Frazer Neil, Loveland, CO 80538-5613 (US)
(74) Representative: Jackson, Richard Eric

(57) **Abstract**

Embodiments of an apparatus (100, 200, 300) allow the remote monitoring of utility usage without the need of a human meter reader. The embodiments include a usage data provider (110, 130, 310) that generates an electronic form of utility usage data, and a communications interface (120) that communicates the electronic form of the utility usage data to a remote data collection facility.

## Description

### BACKGROUND OF THE INVENTION

In the overwhelming majority of communities today, residential and commercial use of public utilities, such as electricity, water, natural gas, and the like, is monitored for billing purposes by way of manual reading of utility usage meters located on the site of the residential or commercial entity being monitored. The meters normally contain numerical gauges or dials that indicate some absolute utility usage value. Typically, each utility company dispatches human meter readers periodically to manually read each meter and record the usage indication from the meter, either onto paper or in an electronic device. The meter readers then return to the utility company to deposit the data they have collected so that the utility provider may bill each residential or commercial customer based on the amount of the utility that customer consumed since the last meter reading.

Such a system of data collection, ubiquitous for many years, involves several difficulties. For one, the aggregate amount of labor, time, and expense involved is rather immense, considering each customer site of the utility company must be visited personally by a meter reader on a periodic basis. Additionally, the utility meters are not always accessible to the meter reader, causing the reader to return another time, thereby adding further costs and delays. Alternately, the utility company may deliver a postcard to be filled out and returned by the customer indicating the position of dials or gauges on the meter. Otherwise, the utility company may just bill the customer at an assumed rate for the current billing cycle.

Therefore, from the foregoing, a new apparatus and method that allows for more expedient and cost-efficient monitoring of customer utility usage by greatly reducing the amount of human labor involved would be advantageous.

### SUMMARY OF THE INVENTION

Embodiments of the present invention, to be discussed in detail below, allow a utility company to remotely monitor a customer's utility usage, eliminating the need for a human meter reader. Such monitoring would virtually eliminate employee visits to each customer site for the purpose of reading utility meters. In one embodiment of the invention, an apparatus to allow such monitoring includes means for determining the amount of a utility consumed, with the determining means generating an electronic form of utility usage data. The determining means may provide the electronic form of the data by way of a direct measurement of the amount of the utility consumed, or by way of transforming into electronic form the data produced by a measuring device internal or external to the apparatus. Means for communicating is then employed to transmit the electronic form of the utility usage data to a remote data collection facility to which the utility provider has access.

Another embodiment of the invention takes the form of a method of allowing a utility company to remotely monitor a customer's utility usage. First, an amount of a utility consumed is determined, thereby generating an electronic form of utility usage data, which is then communicated to a remote data collection facility. The electronic form of the data may be generated directly from the utility usage, or may involve a measuring step that generates the utility usage data in a visual form, followed by a transformation of the data into electronic form.

Other aspects and advantages of the invention will become apparent from the following detailed description, taken in conjunction with the accompanying drawings, illustrating by way of example the principles of the invention.

### BRIEF DESCRIPTION OF THE DRAWINGS

FIG. 1 is a block diagram of an apparatus for remote monitoring of utility usage according to an embodiment of the invention, in which a preexisting measuring device external to the apparatus for measuring utility usage is employed.
FIG. 2 is a block diagram of an apparatus for remote monitoring of utility usage according to an embodiment of the invention in which the apparatus includes a measuring device configured to measure usage of a utility.
FIG. 3 is a block diagram of an apparatus for remote monitoring of utility usage according to an embodiment of the invention in which a usage data provider directly generates an electronic form of usage data.
FIG. 4 is a block diagram of the usage data provider of the apparatus according to an embodiment of the invention, with the usage data provider using, in part, an optical sensor.
FIG. 5 is a block diagram of the usage data provider of the apparatus according to an embodiment of the invention, with the data provider employing an ammeter and an integrator.
FIG. 6 is a block diagram of an optional enhancement embodiment of the invention that provides remote control of electricity utility consumption.
FIG. 7 is a flowchart of a method of remotely monitoring, and optionally controlling, utility usage according to an embodiment of the invention.

### DETAILED DESCRIPTION OF THE PREFERRED EMBODIMENTS

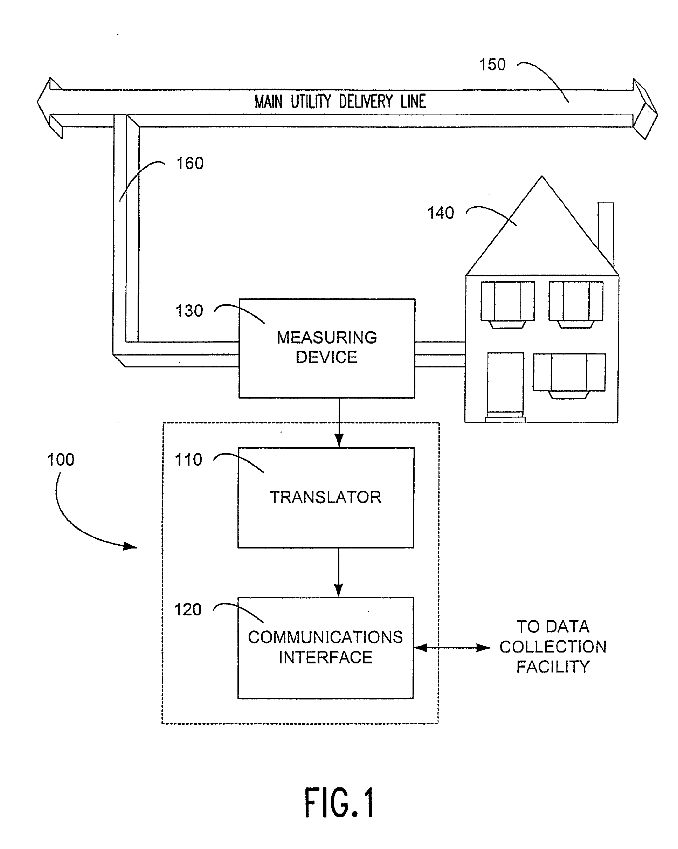

The embodiments of the invention, which are described below, allow the monitoring of customer utility usage without the typical need for human meter readers to personally visit each customer site on a periodic basis. As shown in FIG. 1, a customer site 140 is supplied with a utility by way of a utility branch line 160 connected to a main utility delivery line 150. Typically, a preexisting measuring device 130, residing inline with branch line 160, measures the amount of the utility consumed by the consumer at consumer site 140. The utility being measured by measuring device 130 may be any utility normally delivered to a commercial or residential customer site, including, but not limited to, water, natural gas, and electricity.

One embodiment of the invention, shown in FIG. 1, is an apparatus 100 that is capable of translating utility usage data from preexisting measuring device 130 into an electronic form of that data. Apparatus 100 then transmits an electronic form of the usage data to a data collection facility accessible by the company providing the utility, so that the customer may be billed according to his particular usage level.

Measuring device 130 may be any device currently used for monitoring utility usage at a customer site 140. Typically, measuring device 130 includes a transducer that relates an amount of a utility being consumed to the motion of a moving element. For example, electricity meters typically employ an induction "motor" in which the associated rotational speed is related to the amount of electricity being consumed at that moment. The moving element, in turn, moves one or more dials or gauges with numbers imprinted thereon so that a trained meter reader may directly view the dials to determine the current usage value. That usage value generally indicates the total amount of usage of the particular utility by the customer since the meter was installed. Utility companies perform such readings on a periodic basis. The customer is then normally billed based on the difference between the two previous meter readings, which indicates the customer's usage of the utility since the last billing.

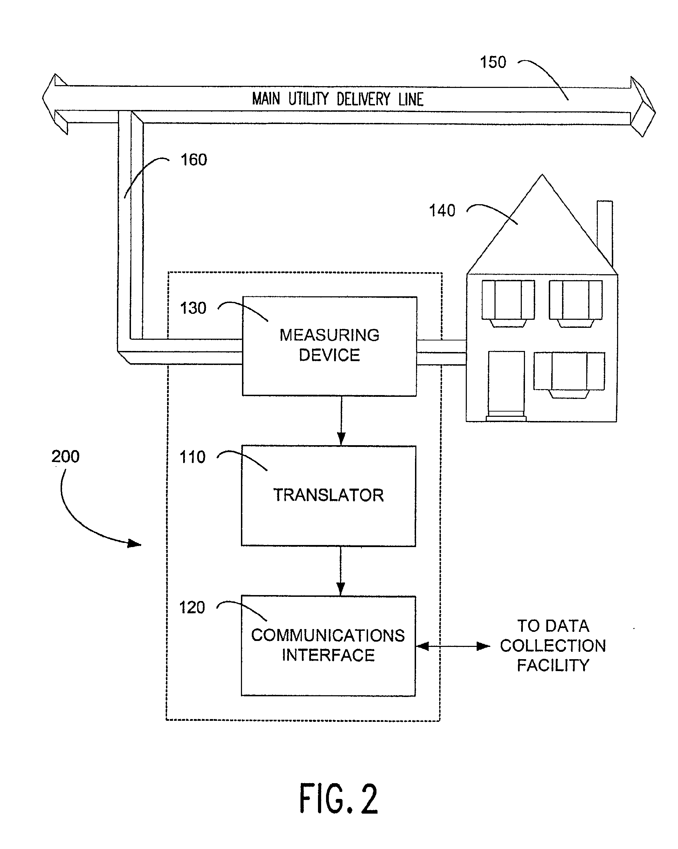

Measuring device 130, as shown in FIG. 1, resides external to apparatus 100. Alternately, measuring device 130 may exist as a portion of a more integrated apparatus 200, as displayed in FIG. 2. Apparatus 100 would be advantageous in providing remote monitoring of customer sites employing previously installed utility meters. Where an integrated monitoring solution is desired, while still employing current utility consumption measurement techniques, apparatus 200 may be useful. Since the same technologies are used for both apparatus 100 and apparatus 200, discussion of the various components of apparatus 100 apply to both embodiments.

Apparatus 100 employs, in part, a translator 110 that interprets the dials or gauges of measuring device 130 and transforms them into an electronic form of the data that the dials represent. For example, translator 110 may include a small camera configured to view the dials or gauges that constitute the display normally read by a human meter reader. A small attached or integrated computer would then process the image of the display provided by the camera so that the usage data indicated by the meter display could then be converted into an electronic form of the data. Generally, such electronic data would be digital in nature, although that form is not necessarily required.

Optionally, translator 110 could provide a display of the usage data to allow the customer to view the data directly from apparatus 100. Such a display would provide a user-friendly means for the customer to determine utility consumption without deciphering the dials or gauges normally associated with measuring device 130.

A communications interface 120 within apparatus 100 would then transmit the electronic form of the usage data to a data collection facility that is accessible by the utility company. Many different embodiments of communications interface 120 could be employed. For example, communications interface 120 could be a wired interface that can attach apparatus 100 to a modem on the customer site. Such a modem would be connected to a telephone line servicing the customer site. In this instance, communications interface 120 could cause the modem to connect to the data collection facility via the phone line, and then transfer the electronic form of the usage data to the collection facility via the phone line and the modem. Alternately, the data collection facility could initiate a connection with communications interface 120 via the modem to collect the data from apparatus 100.

Communications interface 120 could also comprise a wireless interface to an onsite modem, possible utilizing radio frequency (RF) or infrared (IR) interconnection technology. The modem would then be utilized as described above in the previous embodiment.

Additionally, communications interface 120 could be a wired or wireless interface to more sophisticated electronic equipment, such as a general-purpose personal computer, or an onsite network router. Such equipment would then be capable of transferring the data to the data collection facility of the utility company by normal electronic means, such as via modem or the Internet. An advantage of these embodiments is that the customer would be able to access the utility usage data via an onsite computer, possibly upon demand at any time during the period, to monitor utility usage. This capability would allow the consumer to then modify that usage in the future based on the current usage rate.

Another embodiment of communications interface 120 could utilize a wireless interface with sufficient range to transmit to a compatible receiver on a passing vehicle, such as a vehicle dedicated to receiving such information, or even a delivery truck operated by a private carrier. In this embodiment, the receiver on the vehicle could prompt communications interface 120 over the wireless connection for the required data as the vehicle came within the communication range of communications interface 120. In response, communications interface 120 would then upload the data over the wireless interface. The data stored from many similarly equipped customer sites could then be transmitted later from the vehicle to a central data collection facility for billing and other desired data manipulation.

Alternately, the functionality of both translator 110 and communications interface 120 may be provided by a web camera. Such cameras are commonly equipped with an integrated computer that controls the operation of the camera and transmits visual information and electronic data by way of a wired or wireless Internet link. In this embodiment, the integrated computer could process the visual information from the camera to generate the electronic form of utility usage data, and make that information available by way of the Internet.

All of the embodiments disclosed above are useful for providing remote monitoring of utility usage or consumption while utilizing a typical utility measuring device which is either external to or integrated with the apparatus. Such embodiments are advantageous by utilizing prior art measuring equipment supplied with currently existing customer sites. However, the constraint of using current utility usage measuring mechanisms may not apply to new building construction. In such cases, different measuring techniques that are possibly less amenable to visual meter reading, but more appropriate to remote monitoring, may be employed.

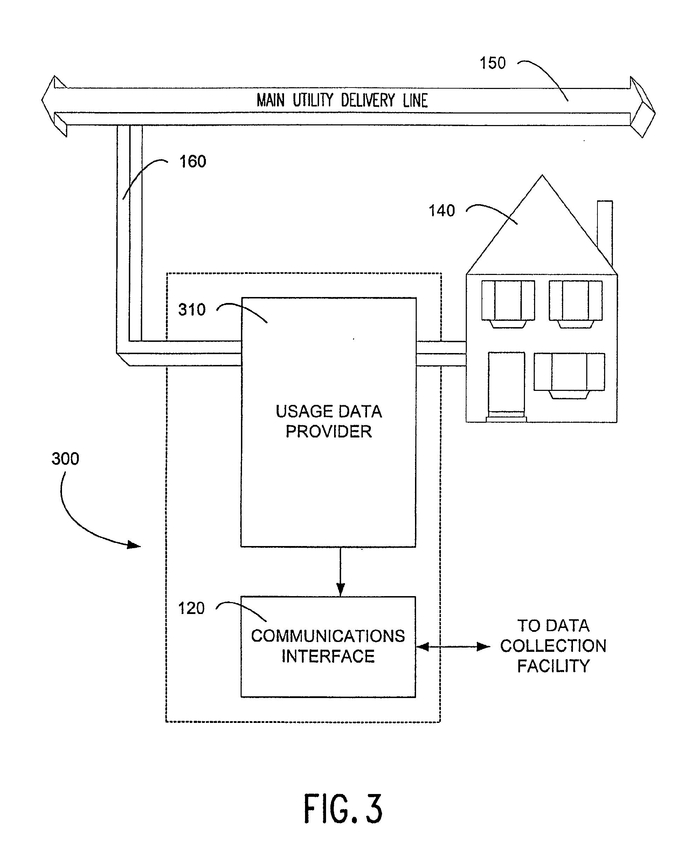

FIG. 3 depicts such a system. Apparatus 300 is an embodiment of the invention that includes a usage data provider 310 that may be better suited for generating an electronic form of usage data than the techniques described in FIG. 1 and FIG. 2.

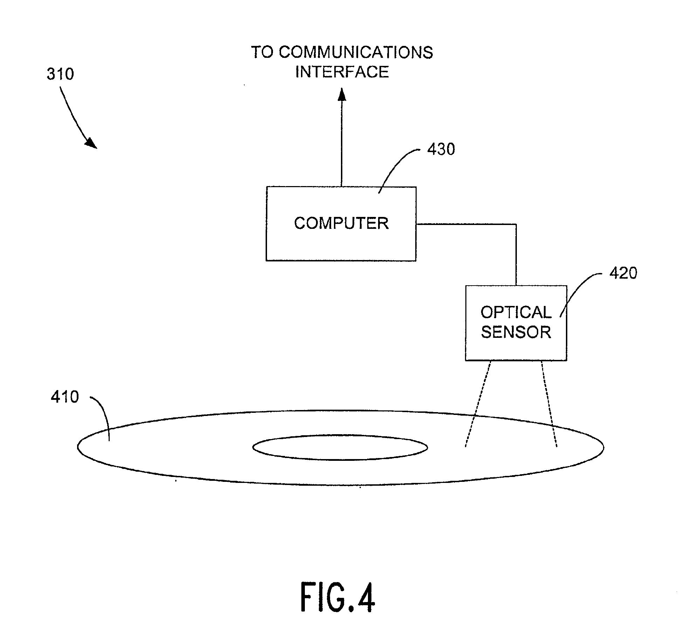

For example, usage data provider 310, as shown in FIG. 4, may contain a rotating element 410 whose rotational velocity is related to the current usage level of the utility being measured. Such an element is employed in currently available utility meters. However, in this case, usage data provider 310 would not be required to include any mechanical dials attached to rotating element 410 to visually indicate customer utility usage. An optical sensor 420 could then detect the rotational velocity of rotating element 410. Optical sensor 420 is normally used as the main component of an "optical mouse" from the prior art. Optical sensor 420, situated closely to rotating element 410, detects differences between consecutive images of the surface of rotating element 410 passing under optical sensor 420. These differences are then utilized by a computer 430, which could be a microprocessor, special-purpose hardware, or the like, to determine how far rotating element 410 has rotated within a given time period. With this information, computer 430 then calculates the current utility usage, and stores the utility usage data electronically.

Other technologies could also be employed for usage data provider 310 when used in conjunction with rotating element 410. For example, simple optical encoder technology could be utilized by providing holes or marks in rotating element 410. The speed at which the holes or marks pass a closely situated optical encoder would indicate the rotational speed of rotating element 410. This information, passed to a computer coupled with the optical encoder would then allow the computer to calculate the current utility usage and store the associated data electronically.

Usage data provider 310, in a fashion similar to translator 110 of FIG. 1 and FIG. 2, may optionally provide a user-friendly display that allows the customer to view current utility consumption directly.

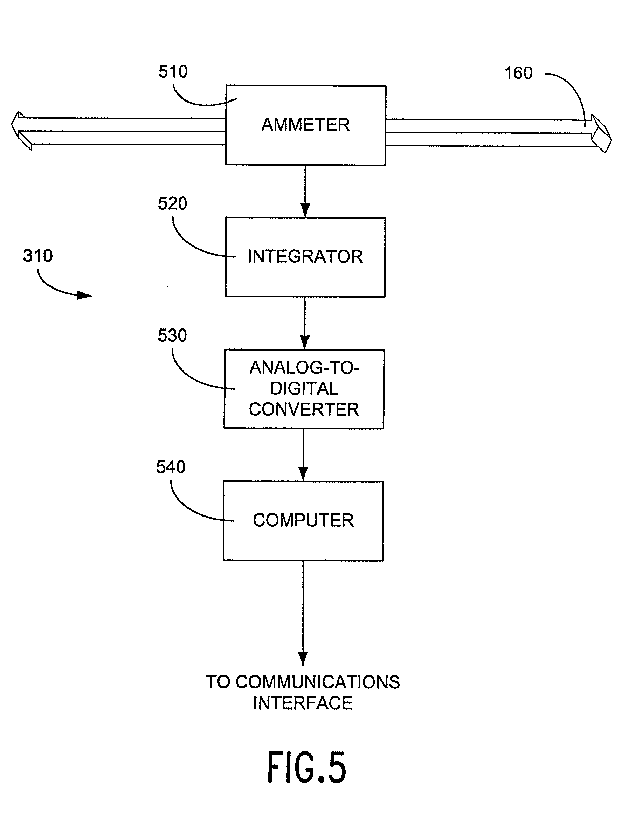

The use of moving elements may also be eliminated entirely by use of another embodiment of usage data provider 310. For example, with respect to the electricity utility, usage data provider 310, as indicated in FIG. 5, may include an ammeter 510 connected inline with utility branch line 160 for measuring current consumption. The output of ammeter 510 could then be coupled with an integrator 520 that integrates the current consumption over time, thus yielding total current consumption over a time period. An analog-to-digital converter (ADC) 530 coupled with the output of integrator 520 would then yield a digital value for the total current consumption, and a computer 540 coupled with the output of ADC 530 would calculate the total amount of electricity consumed using the total current consumption and the nominal voltage of the incoming electrical utility. The nominal voltage value could be either an assumed value, since the voltage from an electricity provider tends to be stable over long periods of time, or could be measured directly from branch line 160.

Additionally, embodiments of communications interface 120 that are discussed above in relation to apparatus 100 (of FIG. 1) and apparatus 200 (of FIG. 2) are equally applicable to apparatus 300 (of FIG. 3).

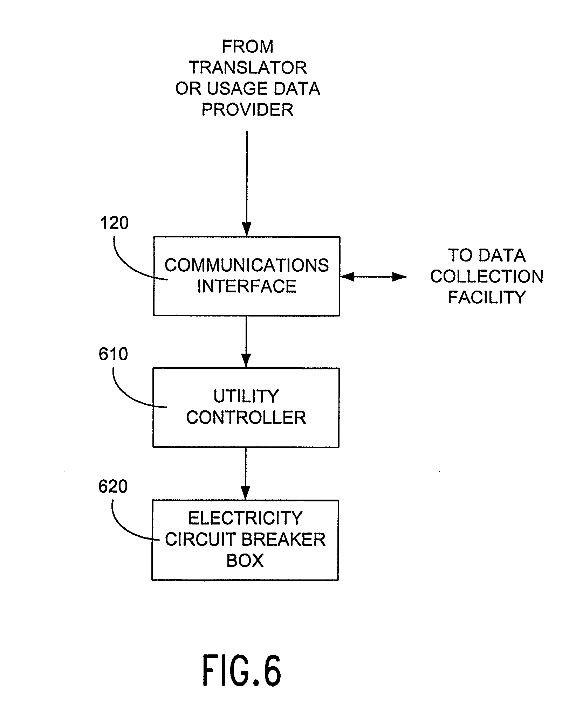

The embodiments of apparatuses 100, 200, and 300 may also be extended to provide control by either the consumer or the utility provider over the consumption of utilities at the customer site. In this case, communications interface 120 may receive remote commands from either the customer or utility company to restrict or reduce consumption of the utility. These commands would be passed to a utility controller, which would cause utility consumption to be restricted in some fashion. Using the example shown in FIG. 6, communications interface 120 is attached to a utility controller 610, which, in turn, is coupled with the incoming utility branch. For example, utility controller 610 may be attached to an electricity circuit breaker box 620. Specific circuit breakers within breaker box 620 may then be selectively turned off, depending on the commands received by communications interface 120. For example, the utility company may command that a breaker attached to an air conditioning unit be turned off to conserve electricity. This control capability would allow utility companies to reduce power consumption in sections of the associated power grid while leaving intact essential power to lights, kitchen appliances, and the like. The utility company would then not be required to resort to typical brownouts or other similarly drastic measures.

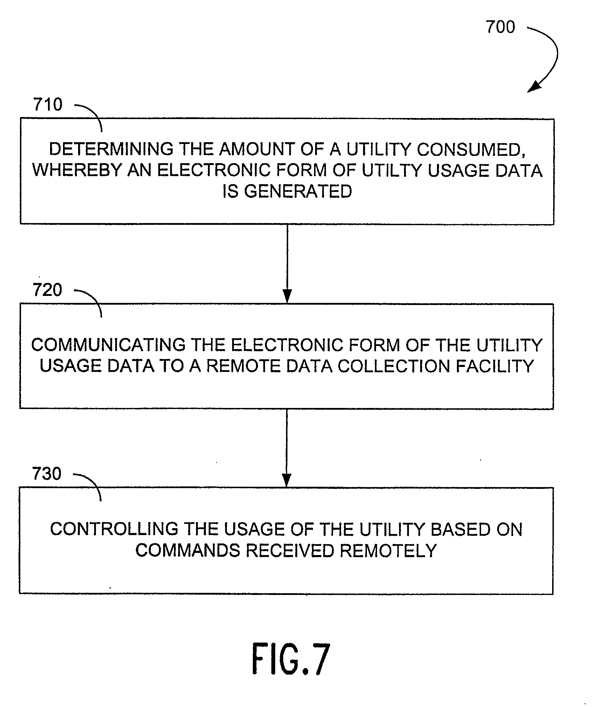

An embodiment of the present invention can also be described as a method 700 (from FIG. 7) of monitoring customer utility usage. First, a customer's usage of a utility is determined, thereby generating an electronic form of utility usage data (step 710). In some cases, this data may already be available by way of an internal or external measuring device providing some visual form of that data; otherwise, the electronic form of the data is generated directly without the need of an intermediate visual form. The electronic form of the utility usage data is then communicated to a remote data collection facility (step 720). Optionally, usage of the utility may be controlled based on commands received remotely (step 730), possibly in response to the electronic form of the utility usage data.

From the foregoing, the embodiments of the invention discussed above have been shown to provide an apparatus and method of monitoring, and optionally controlling, customer usage of a utility delivered to a customer site. In addition, other specific devices and methods embodying the invention are also possible. Therefore, the present invention is not to be limited to the specific forms so described and illustrated; the invention is limited only by the claims.

## Claims

1. An apparatus (100, 200, 300), comprising:
means for determining (110, 130, 310) the amount of a utility consumed, the determining means (110, 130, 310) generating an electronic form of utility usage data; and
means for communicating (120) the electronic form of the utility usage data to a remote data collection facility.

2. An apparatus (100, 200, 300), comprising:
a usage data provider (110, 130, 310) configured to determine the amount of a utility consumed, the usage data provider (110, 130, 310) generating an electronic form of utility usage data; and
a communications interface (120) configured to communicate the electronic form of the utility usage data to a remote data collection facility.

3. The apparatus (300) of claim 2, wherein the usage data provider (310) comprises:
a moving element (410) having a velocity related to a usage rate of a utility;
an optical sensor (420) configured to detect the velocity of the moving element (410), and;
a computer (430) configured to calculate the utility usage data based on the velocity of the moving element (410) detected by the optical sensor (420), the computer (430) generating the electronic form of the utility usage data.

4. The apparatus (300) of claim 2, wherein the usage data provider (310) comprises:
a moving element (410) having a velocity related to a usage rate of a utility;
an optical encoder configured to detect the velocity of the moving element (410), and;
a computer (430) configured to calculate the utility usage data based on the velocity of the moving element (410) detected by the optical sensor, the computer (430) generating the electronic form of the utility usage data.

5. The apparatus (300) of claim 2, wherein the usage data provider (310) comprises:
an ammeter (510) configured to measure an amount of electrical current used from an electrical utility;
an integrator (520) configured to calculate a total current consumption by integrating the amount of electrical current used over time;
an analog-to-digital converter (530) configured to generate a digital form of the total current consumption; and
a computer (540) configured to calculate the electronic form of the utility usage data from the digital form of the total current consumption.

6. The apparatus (100) of claim 2, wherein the usage data provider (110) comprises a translator (110) configured to transform the utility usage data from a measuring device (130) external to the apparatus into the electronic form of the utility usage data.

7. The apparatus (100) of claim 6, wherein the translator (110) comprises a camera configured to capture an image of the utility usage data from the measuring device (130) external to the apparatus, and a computer configured to determine the utility usage data from the image.

8. The apparatus (200) of claim 2, wherein the usage data provider (110, 130) comprises:
a measuring device (130) configured to measure usage of a particular utility, the measuring device (130) generating the utility usage data, and;
a translator (110) configured to transform the utility usage data into the electronic form of the utility usage data.

9. The apparatus (200) of claim 8, wherein the translator (110) comprises a camera configured to capture an image of the utility usage data from the measuring device (130), and a computer configured to determine the utility usage data from the image.

10. The apparatus (100, 200, 300) of claim 2, further comprising:
a controller (610) configured to control utility usage based on control commands received remotely via the communications interface (120).

11. A method (700), comprising the steps of:
determining (710) the amount of a utility consumed, the determining step generating an electronic form of utility usage data; and
communicating (720) the electronic form of the utility usage data to a remote data collection facility.

12. The method (700) of claim 11, wherein the determining step (710) comprises the step of transforming the utility usage data from a measuring device external to the apparatus into the electronic form of the utility usage data.

13. The method (700) of claim 11, wherein the determining step (710) comprises the substeps of:
measuring usage of a particular utility, the measuring step generating the utility usage data, and;
transforming the utility usage data into the electronic form of the utility usage data.

14. The method (700) of claim 11, further comprising the step of controlling (730) the usage of the utility based on commands received remotely.
